# EUROPEAN PATENT SPECIFICATION

(11) **EP 4 469 768 B1**
(45) Date of publication and mention of the grant of the patent: **09.12.2026**
(21) Application number: 23701575.5
(22) Date of filing: 27.01.2023
(51) Int. Cl.: G01L 3/10, G01L 1/12

(54) **DETERMINING THE MECHANICAL STRESS IN PIPES USING MAGNETIC STRESS ANALYSIS**
BESTIMMUNG DER MECHANISCHEN BELASTUNG IN ROHREN MITTELS MAGNETISCHER BELASTUNGSANALYSE
DÉTERMINATION DE LA CONTRAINTE MÉCANIQUE DANS DES CONDUITS PAR ANALYSE DE CONTRAINTE MAGNÉTIQUE

(30) Priority: 28.01.2022 WO PCT/EP2022/052097
(43) Date of publication of application: 04.12.2024
(73) Proprietor: NDT Global Corporate Ltd., Dublin 9, D09 A0E4 (IE)
(72) Inventor: CORNU, Sylvain, 67630 Lauterbourg (FR)
(74) Representative: Global IP Europe Patentanwaltskanzlei
(86) International application number: PCT/EP2023/052054
(87) International publication number: WO 2023/144329

(56) References cited:
- CN-A- 112 985 647
- US-A- 5 869 752
- US-A1- 2018 245 994
- US-B1- 6 239 593

## Description

The invention relates to the inspection of pipes, in particular, to a method and a device for determining mechanical stress in the walls of pipes, mostly in pipelines.

In several cases, it is necessary to measure the stress in a pipeline in a nondestructive way. In particular, stress can be exerted on the pipe due to thermal expansion, contraction or by any kind of mechanical influence, such as a load from above or lateral displacements of the ground which might be caused by earth settlements in particular. Also wear of the pipe material can cause a reduced wall thickness, which then causes higher stress in the remaining (reduced) wall. Furthermore, close to welding lines the pipes can be subjected to stress, such as torque within the pipe wall. This can happen especially if the pipe is not its ideal round shape.

Document US 5,532,587A discloses a device wherein correlated data is used to correlate magnetic flux density to the relative magnetic permeability of specific wall locations and thus determine the extent and orientation of stress occurrences. This document is based on the understanding that mechanical stress has an influence on the magnetic permeability. However, as this influence is small, it is essential for the technology disclosed in this document, that the means of magnetic coupling comprises an iron yoke that is located as close as possible to the pipe's inner wall. Thus, this document states: "Each one of the plurality [of magnetic coupling means] must be mounted and maintained in a precise circumferential position such that it is held snugly against the internal surface of the pipeline but not so tightly as to be unable to flex as necessary to pass over and through obstructions.". Document US 5,532,5878A further teaches to position the magnetic sensor between both flanks of the yoke of a permanent magnet. Other documents such as US 7038444B2 teach to position the sensor behind the permanent magnet.

Document US 2018/0245994 A1 discloses a method for measuring forces in an object, wherein the effects of the hysteresis are compensated. A first and very obvious difference of this document in respect to the invention is that this prior art uses a yoke. In the prior art, the orientation of the solenoid for inducing the magnetic field is perpendicular to the surface of the specimen. This implies that the skilled person takes the technical teaching from this document that there should ideally be no distance from the yoke to the material surface. Further, this prior art document teaches (cf. [0013]) that first and second sensing signals are determined at an applied force to determine a correction value that is used to compensate hysteresis effects. These measurements are executed at the "object to be sensed". But this document lacks a technical teaching on how to compensate the hysteresis. The invention as disclosed in the present document uses a "predefined calibration method" that is executed using a specimen with the same metallurgic composition as the pipe to be tested and that this calibration is in a preparation step that is executed before testing the actual pipe.

Thus, in the teaching of the prior art documents in order to determine the stress of the pipes, it is understood to be necessary to precondition the pipe before (and/or during) taking the measurement. This is done by applying a constant (=non-alternating) magnetic field, which assures magnetic saturation in the pipe. Due to this saturation, the hysteresis in magnetic response under load is reduced or eliminated. And as the influence from mechanical stress in the pipe to the magnetisation is rather small, it has been understood to be necessary to use a yoke to direct the magnetic field to the pipe's material and/or from the pipe to the magnetic sensor.

The problem to be solved with the present invention is to provide an improved method for determining the stress in a pipe, in particular in a pipeline, and that can be used with reduced structural requirements. Also improved meaningful test data should be received for determining the stress in that pipe.

This problem is solved with the features of the independent claim. Preferred embodiments are subject to the dependent claims.

In a method for determining mechanical stress in ferromagnetic pipes, magnetic fields are introduced into the pipe wall at at least two different frequencies, the resulting magnetic field (or fields) from the magnetised pipe is (are) measured with a magnetic sensor and then converted into a predictive value for the existing mechanical stress within the pipe, using a predefined calibration method that was created beforehand by analysing the magnetic field that was measured at the different frequencies. This step of calibration is preferably done at a specimen, that is in particular different from the pipe that is measured. Because for getting sufficient data also mechanical stress is applied during the calibration method. Applying mechanical stress however is practically only possible at a specimen that is separate from the pipe. The magnetic field is an AC (alternating current) field.

The invention is primarily based on the inverse magnetostrictive effect, magnetoelastic effect or Villari effect, which means that there is a change of the magnetic susceptibility of a material when subjected to mechanical stress. Under a given uniaxial mechanical stress, the flux density for a given magnetizing field strength may increase or decrease. The way in which a material responds to various stress depends on its magnetostrictive properties. However, this effect comprises a certain hysteresis, which means, even though a load might have been reduced from a maximum, the magnetic behaviour of the magnetostrictive effect does not decrease proportionally. This hysteresis makes predicting stress within a pipe based on a measured value difficult and this problem is overcome (as will be explained later in detail), by measuring the magnetic behaviour beforehand at different frequencies.

To measure the magnetic field, preferably neither a demagnetization nor prior magnetic saturation nor magnetic saturation in conjunction with the measurement of the pipe wall to be measured is carried out. In the prior art it was understood to be necessary to have such a pre-handling or exertion of a magnetic field during measuring to diminish the effects of the hysteresis. To do that, typically a strong permanent magnet was used (even though an electric magnet that causes a permanent field is considered to be equivalent). As will be explained later in detail, such a magnet can be avoided according to the teaching of this invention.

In particular, to determine the prediction value of the existing mechanical stress in the pipe, only magnetic field data measured with the magnetic sensor or several magnetic sensors that each measure the resulting magnetic field(s) is or are used. In particular, this does not exclude an optional odometer being used to determine the location of the measuring device.

In the preparation step of the predefined calibration method, several magnetic field values are measured while applying varied mechanical stress to a test specimen under defined magnetic fields at different frequencies to receive hysteresis data reflecting the varied mechanical stress. The predefined calibration method establishes a hysteresis (in the form of a magnetic field (as measured voltage) vs. applied load graph) of the measured magnetic field (resulting from magnetisation of the pipe wall) as a function of the applied mechanical stress and introduced magnetic fields. This "training" is necessary for learning about the hysteresis of the ferromagnetic pipe material at different frequencies, so that, when measuring the pipe, the predictive value can be calculated from the measured values from at least two different frequencies. With this data a detailed understanding, about the exact hysteresis behaviour of the material of the pipe is obtained, which is used later to meaningfully interpret the data measured at the in-situ pipe.

In the preparation step of the predefined calibration method, the applied mechanical stress comprises both tension and compression. Tension reflects positive "pulling" strength and compression is a force in the opposite direction. The load history of the pipe(-line) is typically unknown, so that preparing the test data for both pulling and compression is needed to obtain the hysteresis model for each frequency, so that later, when measuring at the pipeline, the measured data on the magnetization can be calculated to obtain the prediction value for the existing mechanical stress.

In particular, when the measurements for obtaining the predictive value for the existing mechanical stress in the pipe are taken, a comparative value is calculated for each of the frequencies of the magnetic field(s) introduced and the predefined calibration method uses comparative values to calculate the predictive value for the existing mechanical stress. The comparative value preferably reflects magnetization or the magnetic flux density.

The predefined calibration method preferably comprises reference tables or artificial intelligence such as preferably a neuronal network.

In both methods for determining the predictive value for the existing mechanical stress within the pipe and also preferably preparing the predefined calibration method with a specimen, a combined magnetic field of different frequencies is simultaneously applied to that pipe or test specimen. This field is generated using a signal generator. And the magnetic sensor collects the data measured, that is demodulated to create components of the magnetic field condition at different frequencies. Only the preparation of the calibration method comprises applying varying mechanical stress to the specimen. Generally, the different frequencies are applied simultaneously, but they can be applied sequentially as well. However, when inspecting the pipe, high speed measurements are intended, and therefore (at least here) it is preferred to apply the different frequencies simultaneously.

Furthermore, the invention is related to a computer program product, loadable into a program memory and having program instructions to perform all the steps of a method which is described herein, when the program is executed.

Also, the invention is related to a pipe inspection device for determining the mechanical stress within a pipe and the device comprises: at least one measuring unit comprising at least one solenoid for creating at least one magnetic field based on signals generated by a signal generator with different frequencies either simultaneously or sequentially. The measuring unit comprises at least one magnetic sensor. However, the measuring unit and/or pipe inspection device do not comprise a magnet for creating a permanent (and non-alternating field). Alternatively, or in addition, the device does not comprise a yoke for directing a permanent non-alternating magnetic field close to the pipe that is being inspected. Alternatively, or in addition, the device does not comprise a yoke for the solenoid and/or the magnetic sensor.

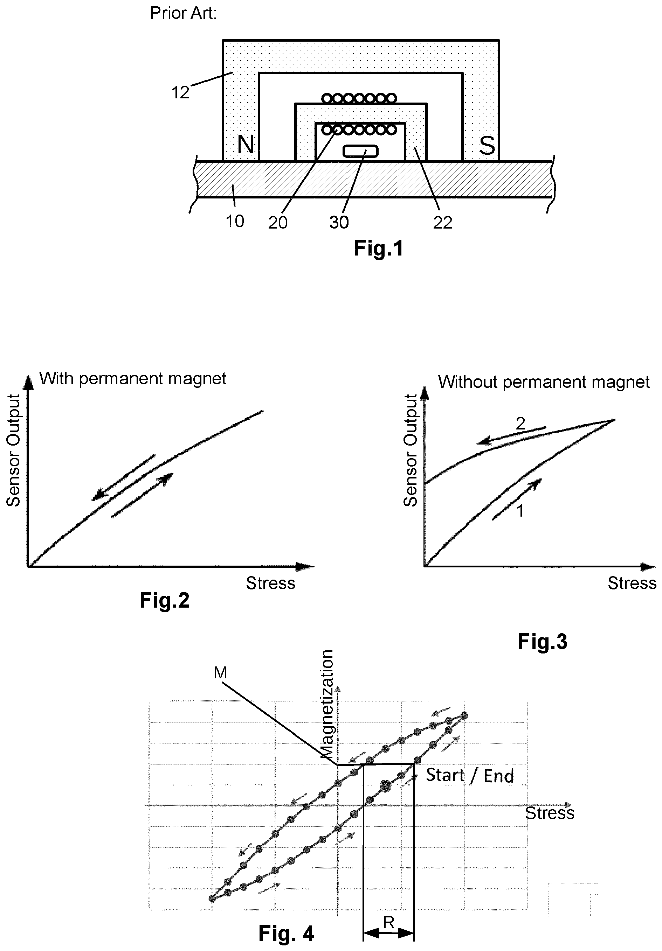

Alternatively, and/or in addition, the measuring unit comprises clearance means for creating certain gaps from the inner wall of the pipe to both the solenoid and at least one of the magnetic sensors, when the pipe inspection device is located in that pipe. In the prior art, a pre-saturation of the ferromagnetic material (either in preparation or during the measurement) was needed to eliminate the effects of hysteresis (This effect is explained in the discussion of the preferred embodiment using figures 2 and 3). An advantage of the invention is, that meaningful results can be obtained even though the pipe's material might be subject to hysteresis. This also means, that the measurement device is less sensitive to harmful effects which allows a distance between the wall to the solenoid and/or magnetic sensor. This reduces the requirements of the pipe inspection device for the solenoid and/or magnetic sensor to be positioned exactly as close as possible to the wall. Instead, an approximate positioning using a clearance means, such as a sliding bar, a distance bracket or similar construction is sufficient. Elastic means of the pipe inspection device can push the measurement unit(s) radially outwards so that the clearance means are in contact with the pipe's inner wall. As the solenoid and/or magnetic sensor have a radially inwardly directed offset, these components are at a defined distance to the pipe's inner wall, which also protects them from mechanical damage, that could otherwise occur. And the determined gap from the pipe's inner wall to the magnetic sensor(s) can be at least 0.1 mm, preferably at least 1 mm and most preferably at least 2 mm. In other preferred embodiments, the distance of the solenoid to the pipes inner wall can be up to 5 mm and in particular approximately 8 mm. The definition of the distance is measured from the closest point of the solenoid to the pipe wall. It is to be emphasized that it is the typical motivation of a skilled person to locate the magnetic sensor directly attached to the pipes wall without any gap. Further the gap from the pipe's inner wall to the solenoid can be in particular at least 0.1 mm, preferably at least 0.5 mm and more preferably at least 3 mm or most preferably more than 5 mm.

Furthermore, the measuring unit of the pipe inspection device can comprise at least two magnetic sensors and the distance of these sensors is less than 50 mm and in particular less than 30 mm, for a pipe inspection device that is adapted to inspect 24 inch [24 inch = 60.96 cm] pipes and preferably the measuring unit comprises at least 5 magnetic sensors with each of these magnetic sensors having a distance of less than 50 mm preferably less than 30 mm, most preferably less than 2 mm and in particular practically touching. For pipe inspection devices adapted for different pipe diameters, the above-mentioned values are adapted proportionally. As no yokes are used in the present invention and due to the differences in the measuring and calculating process, the requirements for the exact positioning and applying the magnetic field from the solenoid into the pipes are reduced. In particular, shielding requirements do not need to be considered. This means that even the measuring unit can comprise at least 50 magnetic sensors and preferably comprises more than 100 magnetic sensors. All these values are considered for a pipe inspection device that is adapted to inspect 24 inch [24 inch = 60,96 cm] pipes, whereas the mentioned number of sensors varies proportionally to that mentioned diameter. In other words: The sensors can be positioned much closer to each-other, because no yoke is used.

As mentioned before, the prior art testing devices used yokes. The yokes however are typically subject to self-resonance, which often occurs at 40 kHz (or higher). The preferred pipe inspection device however has no yokes and thus is not subject to these limitations. Therefore, it can work with higher frequencies, so it can be configured that at least one magnetic sensor measures frequencies greater than 20kHz preferably frequencies bigger than 40 kHz and most preferably bigger than 60kHz. Typically, the measurements can be taken with frequencies around 80 kHz +/-30kHz. Higher frequencies result in a faster measuring process and therefore allow the pipe inspection device to be moved within that pipe at a faster speed. Also, frequencies up to 500kHz are possible. Higher frequencies also cause a reduced depth of measurement.

In the following a preferred embodiment is described by using the attached figures:
Fig. 1 shows a prior art embodiment for measuring stress in pipes,
Fig. 2 shows the hysteresis of a specimen, when the specimen is in a saturated magnetic field,
Fig. 3 shows the hysteresis of a specimen, when the specimen is not in a saturated magnetic field,
Fig. 4 shows a variant of the hysteresis model, that is shown in Fig. 3,
Fig. 5 a flow diagram for creating a predictive model to determine a predictive value of stress,
Fig. 6 a flow diagram for using the predictive model according to Fig. 5 to determine the predictive value of stress,
Fig. 7 detailed data of several hysteresis at different frequencies, that are overlaid and,
Fig. 8 optional output from the predictive model.

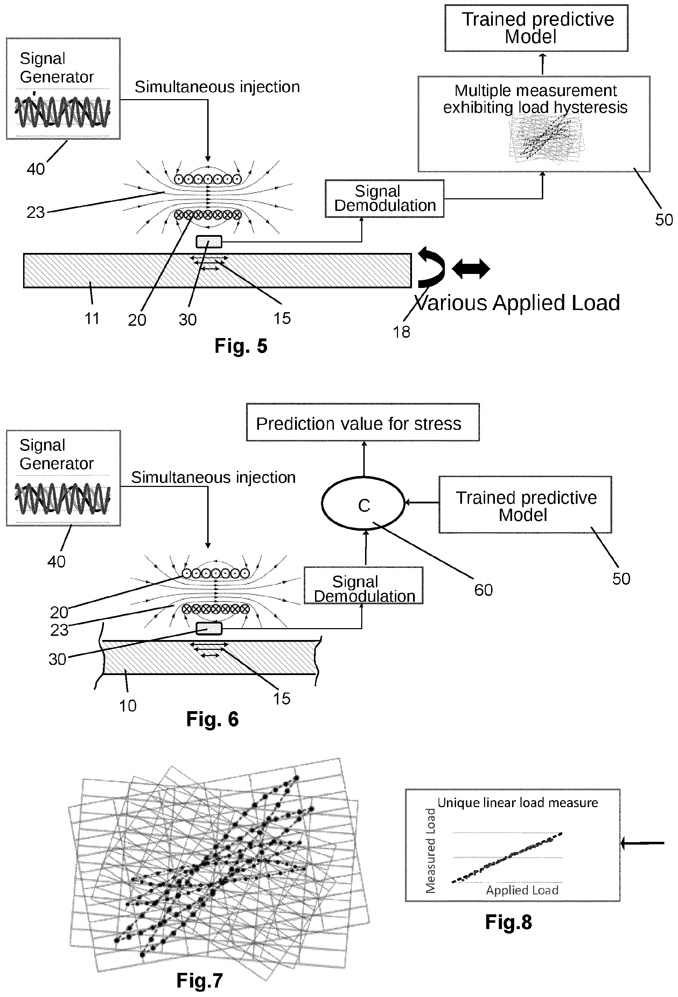

Fig. 1 shows a typical arrangement of components which is known from the prior art for measuring stress in a pipe. A permanent magnet 12 is positioned as close as possible to a pipe (or pipeline) 10. A non-alternating magnetic field 23 (see fig. 5) is induced to that pipe 10 by that magnet 12. This arrangement further comprises a solenoid 20, which is preferably in many cases (but not necessary in all cases) equipped with an iron core yoke, which is located as close as possible to that pipe 10 to induce that magnetic field 23 into the pipe 10. A sensor 30 measures the resulting magnetic field that is caused by eddy currents, which themselves were caused by the magnetic field 23.

The orientation of the solenoid 20 is preferably such that the magnetic field induced by the solenoid 20 is in parallel to the surface of the specimen 11. Equally also the orientation of magnetic sensor 30 is such that the primary sensing direction is in parallel to the specimen surface. The first and most important advantage of this orientation is that the influence of the distances of the solenoid 20 and sensor 30 versus the specimen is not that critical, in particular a defined gap becomes possible. And this orientation further allows that (in contrast to various prior art applications) a yoke is not needed at both the solenoid 20 and the sensor 30. When prior art concepts use a yoke that is perpendicular to the specimen's surface, the magnetic field is guided deep into the material. The inventive concept however has a major allocation of the field close to the specimen's surface. To allow this orientation, typically a field is used that is stronger than in those prior art applications.

The orientation of the solenoid 20 and sensor 30 is preferably in the longitudinal direction of the pipe that is measured. It is known to the skilled person that within a force-loaded pipe different forces and torques are induced. The torques can be considered as pulling or pushing forces with a lateral displacement as their leverage arm. Therefore, no particular focus needs to be set on the torques. Thus, the focus can be on the pulling/pushing forces in the three cartesian directions, which should be discussed in the following in respect to this application which is directed to stress in a pipe. A pipe has the freedom to expand or contract in radial direction is stress is applied. Thus, this stress is diminished by a corresponding displacement. Stress in tangential direction has been understood to be less critical, because in practical usage tangential loads are less relevant. For forces in axial direction, the pipe has hardly any possibility to reduce them by a displacement. Thus, these forces are most interesting to be considered. And as the orientation of the fields (both induced and measured) has a primary orientation in the pipe longitudinal direction, this is the best way to determine this most meaningful stress.

The magnetic sensor 30 can be positioned with a defined gap versus the pipe's inner wall to the magnetic sensor(s). This gap can be preferably at least 0.1 mm, more preferably at least 1 mm and most preferably at least 2 mm. Also, or alternatively, for the solenoid 20, a defined gap to the pipe's inner wall is at least 0.1 mm, preferably at least 0.5 mm and more preferably at least 3 mm or most preferably more than 5 mm. Conventionally, it is the motivation of a skilled person to minimize such gaps. However, due to two reasons a defined minimum gap becomes possible: First: The orientation of the induced field of the solenoid 20 and the sensing direction of the magnetic sensor 30 is preferably in parallel to the pipe's inner surface, and thereby these distances have a reduced influence on the induced field and the measured value. And second: The magnetic sensors are arranged to measure eddy currents.

To improve the accuracy of the measured magnetic-field values, at least one distance sensor can be used to measure the afore-mentioned distances and the method uses these measured distances to adjust the measured values of the magnetic sensor 30. Moreover, the measurement can be used as a proximity sensor that enables live distance monitoring and keeping a constant distance to the pipe wall. The state of the art typically uses a yoke arrangement which must be in contact with the pipe wall to avoid the air gap affecting the measurement through the air permittivity. However, with the present method wall contact is no prerequisite and factors due to the air gap can be accommodated for by deconvolution from the signals.

Fig. 2 and Fig. 3 show different conditions of the stress history effect and the demagnetisation effect. Fig. 2 shows the condition, according to the embodiment of Fig. 1, where a permanent magnet 12 is used and Fig. 3 shows an alternative without such permanent magnet. It is apparent, that Fig. 3 shows a hysteresis effect. This means, when starting from an initial point with no stress, the sensor output increases with increasing stress (see arrow 1) in an increasing curve. However, when the stress is reduced later on (see arrow 2), the sensor output does not reduce in the same way as when it was increased, but it remains a sensor output, which reflects a certain field strength. In particular, the sensor output reflects the magnetization of the ferromagnetic material of the pipe 10. Fig. 4 is similar to Fig. 3, however a complete cycle is shown, which also includes negative stress (= compression). As this hysteresis effect exists, it is not possible to easily calculate backwards from a measured sensor output to a stress which is imposed on that pipe. For this reason, under prior art, the permanent magnet must be used. The permanent magnet eliminates the effects of hysteresis, so that both arrows are on the same line (cf. Fig. 2), which allows you to easily calculate back from a sensor output to a stress in that pipe.

In other words: The prior loading condition and history of the pipe 10 is typically unknown. This means that it is impossible to know if the measured value will correspond to the ascending or the descending part of the load hysteresis or any value between these curves. A value in the area between these curves (see Fig. 4) will be reached if the previous stress was not increased to the maximum (in Fig. 4 not to the utmost point on the right), but was reduced before reaching that point. Thus, when (see Fig. 4) a value was measured and marked with M, it is not possible to calculate it directly to the stress. All that is known, is that the stress should be within the range that is marked with an R. However, due to the fact that during the training phase, different frequencies were applied to the test specimen 11, thus different hysteresis were obtained as shown in Fig. 7, the different ranges are obtained. There is one range for each frequency, and they form the training dataset for the predictive model. When the predictive model is trained using these ranges, then during the inspection of the pipe 10, it becomes possible to identify exactly the real stress that is exerted from environmental conditions (such as expansions due to temperature) on the pipe 10 by applying the trained predictive model directly to the collected measurement. In a preferred embodiment this is done by changing the predicted value of the stress until a value is found, that lies in the range R for each frequency.

Even though the term "hysteresis" might be commonly defined as a relation between the magnetic field strength to the magnetic induction, here it is considered a relationship between the mechanical stress to that magnetic output.

The invention overcomes the understanding of prior art, that a permanent magnet is always needed. Instead, the effects of hysteresis are observed at different load conditions and under different frequencies. Accordingly, to prepare for measuring at the pipe 10 a calibration method is created. This process is shown in Fig. 5: During the calibration steps, a specimen 11 is used. This specimen 11 should have equal parameters, such as the same metallurgic composition as the pipe 10, that is to be examined later. Also, in some embodiments the same thickness of the specimen as of the pipeline 10, which shall be measured later on, might be required. However, if the measurements, which will now be explained, are conducted with high frequencies, then primarily effects close to the specimen's surface are relevant. Therefore, the thickness of the specimen 11 can (in some cases) be considered less relevant. Preferably, for the magnetic sensor 30, an induction coil or a hall sensor, fluxgate or magnetoresistance sensor can be used.

Fig. 5 shows a signal generator 40, which is capable of creating a number of different frequencies simultaneously. A least two different frequencies are required. In some cases, at least three different frequencies are created by the signal generator 40 and due to the effect that harmonic frequencies occur, the total number of frequencies is larger, so that from three initial frequencies a total of five frequencies are generated under which the measurements can be taken. A higher number of frequencies such as at least four or five are also preferable, because the number of harmonic frequencies increases highly, allowing for even more meaningful test results. Preferably odd harmonics are used based on a main carrier frequency, i.e. that 3^{rd}, 5^{th} harmonics are used. In other embodiments, harmonics from 3-carrier frequencies are used. Thus, also higher levels of harmonics (7^{th}, 9^{th}, ...) are possible. The values to be measured can be extracted using a multiple-linear regression, which is also a preferably method to be employed with the calibration process. By analysing the harmonics, the quality of the measured signal can be improved.

An advantage of the present invention is that the frequencies can be applied simultaneously, and deconvoluted with Fourier Analysis, thus providing an advantage in speed of measurement and calculation.

The electrical output of the signal generator 40 is led to the solenoid 20, which creates a magnetic field 23, that is introduced to the specimen 11. Due to this field in the specimen 11 eddy currents 15 are created, which cause a magnetic field (or a modified magnetic field), which is measured by the magnetic sensor 30. The output of the magnetic sensor 30 leads to a signal demodulation, that is preferably done by a Fournier transformation. The result of that transformation is the plurality of graphs of the model 50. For purposes of better visibility, these overlaying graphs are shown enlarged in Fig. 7. This diagram shows four hysteresis curves which are each calculated at a specific frequency. Each curve consists of several data points. Each of the points stands for a specific stress. According to the claimed invention, when the magnetic field of different frequencies is applied to the specimen 11, the stress is applied by pulling and compressing the specimen 11 (see number 18). The signal demodulation creates for each stress condition one point for each frequency, so that the hysteresis curves are created. This resulting data form the training datasets to train the predictive model, that can be used later on for calculating a specific load at the pipe.

Even though the invention has been explained at the moment using a simultaneous injection of a magnetic field with different frequencies, this injection can also be executed sequentially for one frequency after the other. Generally, the different frequencies are applied simultaneously, but they can be applied sequentially as well.

For each load applied to the specimen 11 the sampling time is preferably less than or equal to 50 ms and more preferred less than or equal to 30 ms, even more preferably less than or equal to 10 ms or most preferred less than or equal to 2.5 ms, but generally less than 1 second. In some embodiments one measurement can be done in less than 5ms, preferably approx. 2.5ms. In other preferred embodiments the sampling time can be 250ms. This duration is typically for testing 5 frequencies. In other words: The duration can be the total time in which the many frequencies are tested but also the time that is used to measure each of the frequencies (20 kHz -500 kHz). This duration is preferably equal to those which are used when examining the pipe 10 in the field. Basically, a short test duration is preferred, as this determines the speed under which the pipe inspection tool can be driven through the pipe. A higher frequency lets the magnetic field(s) not penetrate that deeply into the material. It has been understood that at a frequency of approx. 40 kHz, the relevant magnetic and eddy current effects are in a depth up to 0.1 - 0.2 mm. It has been understood that analysing the effects close to the pipe's surface is sufficient because it can be assumed that the strength distribution is rather independent from radial location within the pipe that is measured. Also, the high frequency (thus the surface-close analysis) brings the advantage that the measured results do not depend on the materials thickness.

Fig. 6 explains, how the pipe (or pipeline) 10 is investigated for calculating the stress that might exist in it. Again, a signal generator 40 is used to create (as mentioned before) magnetic fields in the pipe and a similar magnetic sensor 30 is used to measure eddy currents 15 within the pipe. The data measured is also demodulated. As no external force is applied to the pipe 10 in the field, in this process no hysteresis data is obtained. Instead, one value of the magnetic field, in particular, magnetic induction, is measured for each of the frequencies. A comparator (60) compares the measured values with the trained predictive model and results in a predictive value of the stress in the pipe 10. Preferably the stress is considered as lateral tension (either push or pull) but other stress such as torque can also be determined.

To explain the invention in a more abstract way: The predefined calibration method can be considered as a black box, which receives the information about the hysteresis based on different stress and at different frequencies under training conditions. This means the shape of the hysteresis curves (size, width) is known for different frequencies and stresses. It is not possible to map from only one measured value of the magnetic field to the stress, as it is not known where the stress is located within the area, which is defined within the closed hysteresis curve of Fig. 7. However, by taking measurements at different frequencies to train the predictive model the stress, which is in the pipe 10, can be determined. The predefined calibration method can include a trained predictive model. This can be implemented as a matrix of values of hystereses at different stress and different (mechanical) stress conditions. In particular, this matrix can be a 3-dimensional matrix and/or an AI-system and/or a neural network. The latter trained neuronal networks are useful since the various parameters are complex such that it is not always possible to analytically calculate the calibration results. However, the calibration method can also be implemented as a multi-linear regression. The input parameters are the frequencies and applied loads and the output values are the stress conditions.

The predefined calibration method can be executed in the form of a neuronal network which is trained on the data of the calibration runs. The neuronal network weights the frequency spectrum data such that it can recognise these characteristic measurements in real run situations and associate a certain pipe stress to the real run measured frequency-dependent behaviour. Alternatively, simple reference tables can be generated during calibration which map particular pipe stress to characteristic hysteresis at various frequencies, the association being done by the comparator (60) which can be either a person or a program.

Fig. 8 shows a "unity plot" with data, that can be obtained from the predefined calibration method to verify the prediction quality of the model. A linear relationship between the applied load (or: induced load in a pipe) and the measured load (or: predicted value for stress), demonstrates that the method produces meaningful unambiguous results, as the actual stress in the pipe measured can be mapped in a linear fashion from the predefined calibration.

This data is obtained by applying different mechanical stress to a test specimen 11 at different frequencies. Each of the dots shown represent one load. And a field of hysteresis data as in diagram Fig. 7 is created for each load. These fields are taken and for each of these fields a value is determined for the measured load. This measured load represents the mechanical load which is expected in the pipe under real conditions. Fig. 8 shows a proportional relationship between the measured load and the applied load. Thus, it is possible to uniquely determine each pipe stress on measuring the pipe properties by multi-frequency magnetic field injection.

## Claims

1. A method for determining mechanical stress in ferromagnetic pipes (10), wherein magnetic fields (23) are introduced into the pipe (10) wall at at least two different frequencies, the resulting magnetic field (15) is measured with a magnetic sensor (30) and then converted into a predictive value for the existing mechanical stress within the pipe (10), by using a predefined calibration method that analyses the magnetic field(s) measured at a specimen (11) at the different frequencies
wherein
in a step of preparing the predefined calibration method, a plurality of magnetic field values is measured by applying varied mechanical stress to a test specimen (11) at a magnetic field of at least two different frequencies to receive hysteresis data at different frequencies in respect to the varied mechanical stress.
**characterized in that**
in the step of preparing the predefined calibration method, the varied mechanical stress comprises both tension and compression applied by pulling and compressing the test specimen (11).

2. The method according to claim 1, wherein the predefined calibration method analyses the specimen (11) also at different mechanical load conditions.

3. The method according to claim 1 or 2, **characterized in that** for measuring the magnetic field with the magnetic sensor (30) no prior demagnetization nor prior magnetic saturation nor magnetic saturation in conjunction with the measurement, of the pipe (10) wall to be measured is performed.

4. The method according to any of the preceding claims, wherein when measuring the pipe (10) for each of the frequencies of the introduced magnetic field(s) a comparative value is determined, and the predefined calibration method uses the comparative values to determine the predictive value for the existing mechanical stress.

5. The method according to any one of the preceding claims, wherein only magnetic field data measured with the magnetic sensor (30) or a plurality of magnetic sensors that each measure the resulting magnetic field(s) are used to determine the predictive value of the mechanical stress.

6. The method according to any of the preceding claims, wherein measured signal is analysed using a consideration of the harmonics in a higher frequency to increase the accuracy of the predictive value.

7. The method according to any of the preceding claims, wherein the predefined calibration method comprises multiple linear regression and/or reference tables and/or a trained neuronal network and/or an AI-system and outputs a value of a stress.

8. The method according to any of the preceding claims, wherein in both the determination of the predictive value for the existing mechanical stress within the pipe and also the preparation of the predefined calibration method, a combined magnetic field of different frequencies is employed that were generated by a signal generator (40) and that is either introduced to the pipe (10) or a test specimen (11), wherein the magnetic sensor (30) creates measured data, that is demodulated to create a comparative value of the magnetic field condition at the corresponding frequencies.

## Patentansprüche

1. Verfahren zur Bestimmung der mechanischen Belastung in ferromagnetischen Rohren (10), wobei Magnetfelder (23) mit mindestens zwei unterschiedlichen Frequenzen in die Wand des Rohrs (10) eingeleitet werden, das resultierende Magnetfeld (15) mit einem Magnetsensor (30) gemessen und dann in einen Vorhersagewert für die im Rohr (10) vorhandene mechanische Belastung umgewandelt wird, indem ein vordefiniertes Kalibrierungsverfahren, das die an einer Probe (11) bei den unterschiedlichen Frequenzen gemessenen Magnetfelder analysiert, wobei
in einem Schritt zum Vorbereiten des vordefinierten Kalibrierungsverfahrens mehrere Magnetfeldwerte gemessen werden, indem eine variierende mechanische Belastung auf einen Prüfkörper (11) bei einem Magnetfeld mit mindestens zwei unterschiedlichen Frequenzen ausgeübt wird, um Hysteresedaten bei unterschiedlichen Frequenzen in Bezug auf die variierende mechanische zu erhalten.
**dadurch gekennzeichnet, dass**
im Schritt zum Vorbereiten des vordefinierten Kalibrierungsverfahrens die variierende mechanische Belastung sowohl Zug- als auch Druckbeanspruchung aufweist, die durch Ziehen und Zusammendrücken des Prüfkörpers (11) ausgeübt werden.

2. Verfahren nach Anspruch 1, wobei das vordefinierte Kalibrierungsverfahren den Prüfkörper (11) auch unter verschiedenen mechanischen Belastungsbedingungen analysiert.

3. Verfahren nach Anspruch 1 oder 2, **dadurch gekennzeichnet, dass** zum Messen des Magnetfelds mit dem Magnetsensor (30) weder eine vorherige Entmagnetisierung noch eine vorherige magnetische Sättigung noch eine magnetische Sättigung in Verbindung mit der Messung der zu messenden Rohrwand (10) durchgeführt wird.

4. Verfahren nach einem der vorhergehenden Ansprüche, wobei beim Messen des Rohrs (10) für jede der Frequenzen der eingeleiteten Magnetfelder ein Vergleichswert bestimmt wird und das vordefinierte Kalibrierungsverfahren die Vergleichswerte verwendet, um den Vorhersagewert für die vorhandene mechanische Belastung zu bestimmen.

5. Verfahren nach einem der vorhergehenden Ansprüche, wobei nur Magnetfelddaten, die mit dem Magnetsensor (30) oder mehreren Magnetsensoren gemessen wurden, die jeweils das/die resultierende(n) Magnetfeld(er) messen, verwendet werden, um den Vorhersagewert der mechanischen Belastung zu bestimmen.

6. Verfahren nach einem der vorhergehenden Ansprüche, wobei das gemessene Signal unter Verwendung einer Berücksichtigung der Oberschwingungen in einer höheren Frequenz analysiert wird, um die Genauigkeit des Vorhersagewerts zu erhöhen.

7. Verfahren nach einem der vorhergehenden Ansprüche, wobei das vordefinierte Kalibrierungsverfahren eine multiple lineare Regression und/oder Referenztabellen und/oder ein trainiertes neuronales Netzwerk und/oder ein KI-System aufweist und einen Wert einer Belastung ausgibt.

8. Verfahren nach einem der vorhergehenden Ansprüche, wobei sowohl bei der Bestimmung des Vorhersagewerts für die vorhandene mechanische Belastung innerhalb des Rohrs als auch bei der Vorbereitung des vordefinierten Kalibrierungsverfahrens ein kombiniertes Magnetfeld unterschiedlicher Frequenzen verwendet wird, die von einem Signalgenerator (40) erzeugt wurden, und das entweder in das Rohr (10) oder in einen Prüfkörper (11) eingeleitet wird, wobei der Magnetsensor (30) Messdaten erzeugt, die demoduliert werden, um einen Vergleichswert des Magnetfeldzustands bei den entsprechenden Frequenzen zu erzeugen.

## Revendications

1. Procédé de détermination de contrainte mécanique dans des conduites ferromagnétiques (10), où des champs magnétiques (23) d'au moins deux fréquences différentes sont introduits dans la paroi de conduite (10), le champ magnétique résultant (15) est mesuré par un capteur magnétique (30) et converti ensuite en une valeur prédictive pour la contrainte mécanique existante à l'intérieur du tuyau (10), au moyen d'un procédé d'étalonnage prédéfini qui analyse le ou les champs magnétiques mesurés sur un échantillon (11) aux différentes fréquences, où
lors d'une étape de préparation du procédé d'étalonnage prédéfini, une pluralité de valeurs de champ magnétique est mesurée par application de contraintes mécaniques variables à un échantillon d'essai (11) avec un champ magnétique d'au moins deux fréquences différentes, afin d'obtenir des données d'hystérèse à différentes fréquences en fonction des contraintes mécaniques variables.
**caractérisé en ce que**,
lors de l'étape de préparation du procédé d'étalonnage prédéfini, la contrainte mécanique variable comprend à la fois une traction et une compression appliquées en tirant et en comprimant l'échantillon d'essai (11).

2. Procédé selon la revendication 1, où le procédé d'étalonnage prédéfini analyse également l'échantillon (11) dans différentes conditions de charge mécanique.

3. Procédé selon la revendication 1 ou la revendication 2, **caractérisé en ce que**, pour mesurer le champ magnétique au moyen du capteur magnétique (30), aucune démagnétisation préalable, ni aucune saturation magnétique préalable, ni aucune saturation magnétique en conjonction avec la mesure de la paroi de conduite (10) à mesurer ne sont effectuées.

4. Procédé selon l'une des revendications précédentes, où, lors de la mesure de la conduite (10), une valeur comparative est déterminée pour chacune des fréquences du ou des champs magnétiques appliqués, et le procédé d'étalonnage prédéfini utilise les valeurs comparatives pour déterminer la valeur prédictive de la contrainte mécanique existante.

5. Procédé selon l'une des revendications précédentes, où seules des données de champ magnétique mesurées au moyen du capteur magnétique (30) ou d'une pluralité de capteurs magnétiques mesurant chacun le ou les champs magnétiques résultants sont utilisées pour déterminer la valeur prédictive de la contrainte mécanique.

6. Procédé selon l'une des revendications précédentes, où le signal mesuré est analysé en prenant en considération les harmoniques à une fréquence élevée afin d'accroître la précision de la valeur prédictive.

7. Procédé selon l'une des revendications précédentes, où le procédé d'étalonnage prédéfini comprend une régression linéaire multiple et/ou des tables de référence et/ou un réseau neuronal entraîné et/ou un système d'intelligence artificielle, et émet une valeur de contrainte en sortie.

8. Procédé selon l'une des revendications précédentes, où, pour la détermination de la valeur prédictive de la contrainte mécanique existante à l'intérieur de la conduite ainsi que pour la préparation du procédé d'étalonnage prédéfini, il est recouru à un champ magnétique combiné de différentes fréquences généré par un générateur de signaux (40) et introduit soit dans la conduite (10), soit dans un échantillon d'essai (11), le capteur magnétique (30) générant des données de mesure démodulées afin de générer une valeur comparative de l'état du champ magnétique aux fréquences correspondantes.
